# EUROPEAN PATENT APPLICATION

(11) **EP 2 519 004 A1**
(43) Date of publication of application: **31.10.2012**
(21) Application number: 10839130.1
(22) Date of filing: 25.11.2010
(51) Int. Cl.: H04N 7/173

(54) **CONTENT PLAYBACK SYSTEM AND CONTENT PLAYBACK METHOD**

(30) Priority: 25.12.2009 JP 2009295650
(71) Applicant: Fujimura, Hideto, Osaka-shi, Osaka 530-0038 (JP)
(72) Inventor: Fujimura, Hideto, Osaka-shi, Osaka 530-0038 (JP)
(74) Representative: de Beaumont, Michel
(86) International application number: PCT/JP2010/071012
(87) International publication number: WO 2011/077895

(57) **Abstract**

A contents playback system and a contents playback method are provided in which an alarm is automatically set with a simple operation and selected contents are played when an associated time or condition is satisfied.

Time information including a date, a time and the like or a condition and the like are recorded in association with contents. When the user simply selects contents, the contents and time information associated with the contents are received at a mobile terminal device and the contents are automatically played at a time indicated by the time information. The time information includes time associated with the details of contents. For example, if the contents include a sound for reading out program information of a broadcast program, the time information corresponds to a broadcasting date included in the program information.

## Description

### BACKGROUND

### [Technical Field]

The present invention relates to a method of setting an alarm in a terminal device such as a mobile phone having an alarm function, and more specifically to a contents playback system and a contents playback method, in which the alarm is automatically set with a simple operation of selecting content from a contents server device recording contents to be offered, and the selected content is played when the time and condition related to the alarm function are satisfied.

### [Description of Related Art]

In recent years, portable devices such as a mobile phone, a portable music (moving image) player and a Personal Digital Assistant (PDA) have been widespread, while having more various functions therein. There is a wider variety of functions that can be implemented by a mobile phone or a portable music player in addition to the main function of a telephone function or a music-playing function. A mobile phone can also be used to, for example, access the Internet and play music or moving image.

The alarm function may be included in any portable devices, not limited to a mobile phone. When the alarm function is used, the user activates an alarm setting application for setting time, to set the sound and volume of the alarm to be played at the preset time. As for the alarm sound to be played, contents may be obtained from a contents provider via the Internet and the obtained content may be set as the alarm sound.

The alarm function is used not only for a waking time but also for a reminder function such as a schedule. Patent document 1 discloses a system of controlling the alarm ringing time by correcting the alarm ringing time, which has been registered by the user in advance, from a distant server device in accordance with a traffic condition, and further notifying a terminal device of the information including weather or traffic condition.

Patent Document 2 proposes a configuration in a mobile phone having a function of viewing the television broadcast for offering information on broadcast programs suitable to the schedule and preference of the user based on various types of information registered in the mobile phone so as for the user to watch a preferred program. More specifically, Patent Document 2 discloses a configuration for analyzing a program preferred by the user based on the contents registered in the mobile phone, history of electronic mails, and a configuration for not extracting a program the user cannot watch because he/she is asleep based on time information such as a waking time set by the alarm function included in most mobile phones.
[Patent Document 1] Japanese Patent Application Laid-Open No. 2007-170911
[Patent Document 2] Japanese Patent Application Laid-Open No. 2009-141857

### SUMMARY OF THE INVENTION

The technique disclosed in Patent Document 1 automatically controls the alarm ringing time. It is, however, necessary for the user to set a standard time, making the operation similar to alarm setting in a mobile terminal device as conventionally performed. Moreover, the alarm sound is selected by the user him/herself or is automatically selected irrespective of the user's schedule.

The technique disclosed in Patent Document 2 may allow the user to recognize unnoticed preference of him/herself and to obtain information on television broadcast suitable to the user's schedule in advance. The user will, however, miss such a program if he/she does not watch the program based on the obtained information regarding the broadcasting time, channel and the like. Even if the alarm function is used, the user him/herself needs to set the start time for the broadcast program, the alarm sound and so forth.

The present invention has been contrived in the above circumstances. An object of the invention is to provide a contents playback system and a contents playback method in which an alarm is automatically set by a simple operation of selecting content from a contents server device recording contents to be offered, and the selected contents is played when the related time or condition is satisfied.

A contents playback system according to the present invention including a contents transmission device for reading out and transmitting contents containing recorded sound, and a mobile terminal device connected to the contents transmission device through a communication network and having an alarm function for playing back the contents at a predetermined time is characterized in that at least one piece of time information among a date, a day of the week and a time corresponding to details of the contents is associated with the contents, the contents transmission device includes: a means for receiving identification information for identifying contents from the mobile terminal device; a means for extracting contents and time information associated with the contents based on the identification information; and a means for transmitting the extracted contents and time information to the mobile terminal device, and that the mobile terminal device includes: a means for accepting selection of content; a means for transmitting identification information of the selected content to the contents transmission device; and a means for playing back the content at a time indicated by the time information based on the content and time information received from the contents transmission device.

The contents playback system according to the present invention is characterized in that the contents include a sound indicating a date and details of a broadcast program, and the time information associated with the contents corresponds to at least one of a date, a day of the week and a time corresponding to the broadcasting date.

According to the present invention, a contents playback system including a contents transmission device for reading out and transmitting contents containing a recorded sound, and a mobile terminal device connected to the contents transmission device through a communication network and having an alarm function for playing back the content at a predetermined time is characterized in that a playback condition corresponding to details of the content is associated with and recorded in the contents, the contents transmission device includes: a means for receiving identification information for identifying contents from the mobile terminal device; a means for extracting contents and a playback condition associated with the contents based on the identification information; and a means for transmitting the extracted contents and playback condition to the mobile terminal device, and that the mobile terminal device includes: a means for accepting selection of content; a means for transmitting identification information of selected content to the contents transmission device; and a means for playing back the content when the playback condition is satisfied based on the content and playback condition received from the contents transmission device.

The contents playback system according to the present invention is characterized in that the mobile terminal device includes: a means for accepting a designation of at least one of a date, a day of the week and a time; a means for sending a transmission request for content to the contents transmission device when the accepted date, day of the week and time are the corresponding date, day of the week and time, the contents transmission device includes: a means for receiving a transmission request sent from the mobile terminal device; a means for specifying content based on the received transmission request; a means for determining whether or not the specified content is updated; and a means for sending updated content to the mobile terminal device when the content is updated, and that the mobile terminal device is configured to play back the content sent from the contents transmission device in accordance with the transmission request.

A contents playback method according to the present invention for playback, with a mobile terminal connected through a communication network to a contents transmission device for reading and transmitting contents including recorded sound, the contents at a predetermined time, is characterized in that at least one of time information among a date, a day of the week and a time corresponding to details of contents is associated with and recorded in the contents, the mobile terminal device accepts selection of content, and sends identification information of selected content to the contents transmission device, the contents transmission device receives identification information from the mobile terminal device, extracts a content and time information associated with the content based on the received identification information, and sends the extracted content and time information to the mobile terminal device, and that the mobile terminal device plays back the content at a time indicated by the time information based on the content and time information received from the contents transmission device.

According to the present invention, the contents including sound recorded in the contents transmission device connected to the mobile terminal device through a communication network (wired or wireless) are associated with one of the time information among the date, the day of the week, the time corresponding to the details of the contents, and/or with a playback condition. The time information may be designated by a provider of the contents and recorded, or may automatically be extracted from the details of the contents (sound, text information) and recorded. The playback condition includes a condition where the details of the content is updated or a condition where the contents include specific information.
Identification information of the content selected at the mobile terminal device is sent to the contents transmission device, and content is extracted based on the identification information of the content selected at the contents transmission device. The extracted content and the time information or generation condition associated with the content are transmitted to the mobile terminal device. The received content is played at the time indicated by the time information received by the mobile terminal device together with the content or when a playing condition is satisfied.
Thus, the content to be extracted can automatically be played (ringed) at the date when the date and time associated with the details of the content come or when a condition associated with the details is satisfied if the user designates the content to be an alarm sound, without the need for the user to set both an alarm time and an alarm sound. Note that the content may include not only sound but also a moving image, a static image and/or a character. Furthermore, the content may be formed by main content and sub content, which may separately be played or displayed at appropriate timing.

In the present invention, the contents include sound for program information, announcement, advertisement or the like indicating a broadcast program on television, radio or the Internet. The time information associated with contents includes at least one of a date, a day of the week and a time corresponding to a broadcasting schedule. Accordingly, sound, moving image or the like reading out or showing announcement information (broadcast time, program contents, cast information and the like) of a broadcast program is automatically played at a mobile terminal device at the date corresponding to the broadcasting schedule, for example in the morning of the broadcasting day or just before the broadcasting time.

In the present invention, a request for transmitting contents is sent from the mobile terminal device to the contents transmission device at the timing corresponding to the designated date, day of the week and time. It is then determined at the contents transmission device whether or not the content is updated and, if updated, the updated content is transmitted to the mobile terminal device.
Accordingly, the content indicating up-to-date information can automatically be transmitted at a designated timing corresponding to a certain day of the week, everyday or the like, and can be played at the mobile terminal device.

According to the present invention, the alarm can automatically be set with a simple operation, while content can automatically be played as the alarm sound at a timing satisfying a condition or a time corresponding to the content, improving the convenience. When, for example, the alarm function included in the mobile terminal device is used to manage the schedule, the alarm sound can automatically be set to a sound or a moving image corresponding to the schedule, achieving a more effective alarm function.

In particular, the alarm function of the mobile terminal device can be used to automatically play back the sound corresponding to a broadcast program by, for example, giving an announcement in advance for the start of the program immediately before the broadcast program is started, preventing the user from missing the program and entertaining the user.

### BRIEF DESCRIPTION OF THE DRAWINGS

FIG. 1 is a block diagram illustrating the configuration of a contents playback system according to an embodiment of the present invention;
FIG. 2 is a flowchart illustrating an example of an alarm setting procedure executed at the contents playback system according to an embodiment of the invention;
FIG. 3 is a flowchart illustrating an example of an alarm ringing procedure executed by a control unit of a client device according to an embodiment of the invention;
FIG. 4 is a flowchart illustrating an example of the alarm ringing procedure executed by a control unit of a client device according to an embodiment of the invention;
FIG. 5 is a flowchart illustrating an example of a processing procedure executed by a control unit of a contents server device according to an embodiment of the invention;
FIG. 6 is an explanatory view illustrating an example of a screen displayed on a display unit in an embodiment of the invention;
FIG. 7 is an explanatory view illustrating an example of a screen displayed on the display unit in an embodiment of the invention;
FIG. 8 is an explanatory view illustrating an example of a screen displayed on the display unit in an embodiment of the invention;
FIG. 9 is an explanatory view illustrating an example of a screen displayed on the display unit in an embodiment of the invention;
FIG. 10 is an explanatory view illustrating an example of a screen displayed on the display unit in an embodiment of the invention;
FIG. 11 is an explanatory view illustrating an example of a screen displayed on the display unit in an embodiment of the invention; and
FIG. 12 is an explanatory view illustrating an example of a screen displayed on the display unit in an embodiment of the invention.

### Description of Reference Codes

- 1: contents server device
- 10: control unit
- 11: recording unit
- 111: contents DB
- 112: program information DB (time information)
- 1P: control program
- 13: communication unit
- 2: client device
- 20: control unit
- 2P: control program
- 23: clock unit
- 24: communication unit
- 26: display unit

### DESCRIPTION OF THE PREFERRED EMBODIMENT

The present invention will specifically be described below with reference to the drawings illustrating the embodiments thereof.

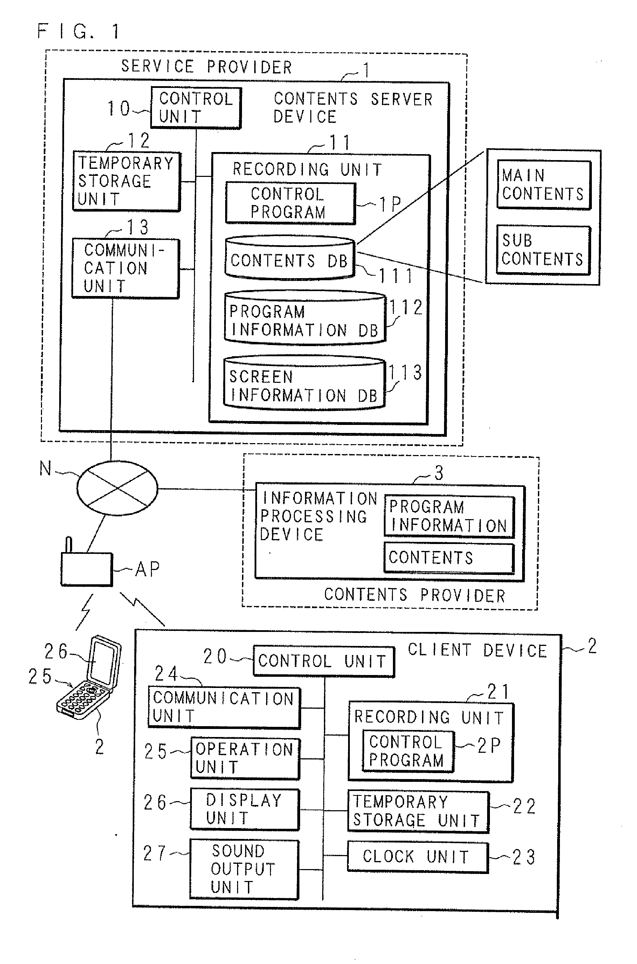

FIG. 1 is a block diagram illustrating the configuration of a contents playback system according to an embodiment of the invention. The contents playback system is configured with a contents server device 1 and a client device 2 connected to the contents server device 1 via a network N including the Internet or the like.

The contents server device 1 is owned by a service provider of a service for automatically setting an alarm in the client device 2 utilized by a user. Note that, in Embodiment 1, contents correspond to data including sound representing details of a program on television, radio or the Internet broadcasting, while time information including a date, a day of the week, a time and the like at which the contents are to be played are recorded as program information. Such a configuration may also be employed that the contents and program information are provided by a contents provider such as a broadcast station, and transmitted from an information processing device 3 owned by the contents provider, which is connected to the contents server device via the network N, and are recorded.

The contents server device 1 uses a server computer and includes a control unit 10, a recording unit 11, a temporary storage unit 12 and a communication unit 13.

The control unit 10 uses a Central Processing Unit (CPU) and a Micro Processing Unit (MPU) to read out and execute a control program 1P recorded in the recording unit 11, to make the server computer operate as the contents server device 1 (contents transmission device) according to the present invention.

For the recording unit 11, a recording device such as a hard disk drive or a Solid State Drive (SSD) is used. Recorded in the recording unit 11 are the control program 1P, a contents database (hereinafter referred to as contents DB) 111, a program information database (hereinafter referred to as program information DB) 112 and a screen information database (hereinafter referred to as screen information DB) 113, from which data can be read out by the control unit. The recording unit 11 may alternatively be configured as a device independent from the server computer and may be connected to the server computer such that the contents in the DB can be read out by the control unit 10.

The contents DB 111 records therein contents including sound for reading out program information such as the start time, end time, detailed contents for a broadcast program. The contents may additionally include a static image, a moving image, text information or the like related to the broadcast program. Each of the contents is associated with identification information for identifying and specifying contents. Note that the contents may be formed with main contents and sub contents as shown in FIG. 1 and, for example, either one of which may be designated at the time of playback.

In the program information DB 112, program information associated with the contents, including a broadcast date and a broadcast channel of each program is recorded. The program information may also include text information on details of broadcasting. Moreover, the program information may be a condition under which a program is to be played, depending on the details of the program. Each piece of program information is associated with identification information corresponding to each of contents in the contents DB 111. The program information associated with the identification information can be read out from the program DB 112 when contents are specified in the contents DB 111.

In the screen information DB 113, information on a screen is recorded, the screen being transmitted to the client device 2 when the service for automatically setting an alarm is provided by the contents server device 1. Note that a screen corresponding to each of the contents may additionally be recorded in the screen information DB 113.

For the temporary storage unit 12, a RAM such as a Dynamic Random Access Memory (DRAM), a Static RAM (SRAM) or the like is used. In the temporary storage unit 12, information generated by the processing of the control unit 10 is temporarily stored. The communication unit 13 uses a network card to implement communication via the network N.

A mobile phone is used for the client device 2, which includes a control unit 20, a recording unit 21, a temporary storage unit 22, a clock unit 23, a communication unit 24, an operation unit 25, a display unit 26 and a sound output unit 27. Note that the client device 2 is not limited to a mobile phone, but may be a PDA, a portable music/video image player or a personal computer. When the portable music/video image player is employed, it is not necessary to include a communication unit. In such a case, contents and program information (time information) are received from the contents server device 1 through a communication function of a personal computer connected to update music or moving image data.

The control unit 20 uses a CPU, a MPU and the like to read out and execute a control program 2P recorded in the recording unit 21 for the mobile phone to operate as the client device 2 (mobile terminal device) according to the present invention.

For the recording unit 21, a recording device such as a flash memory is used. In the recording unit 21, contents and program information received from the contents server device 1 by the processing described below may be recorded in addition to the control program 2P.

For the temporary storage unit 22, a RAM such as a DRAM or a SRAM, or a flash memory is used to temporarily store information generated from the processing performed by the control unit 20. The clock unit 23 monitors or obtains time using an oscillator, a Global Positioning System (GPS) or the like, which helps the control unit 20 to obtain the current time.

The communication unit 24 uses a chip for realizing wireless communication for a mobile phone with an access point AP, to implement connection and communication with the contents server device 1 via the access point AP and the network N.

The operation unit 25 is an interface including various buttons such as a numeric key, a character key and a decision button for the mobile phone and notifies the control unit 20 when various buttons are pressed. The display unit 26 includes a display and a driving circuit using a liquid-crystal panel, an organic Electroluminescence (EL) panel or the like, to display an image based on image information given to the control unit 20. The sound output unit 27 includes a circuit such as a speaker, an amplifier and the like, to output sound or music based on sound information given to the control unit 20.

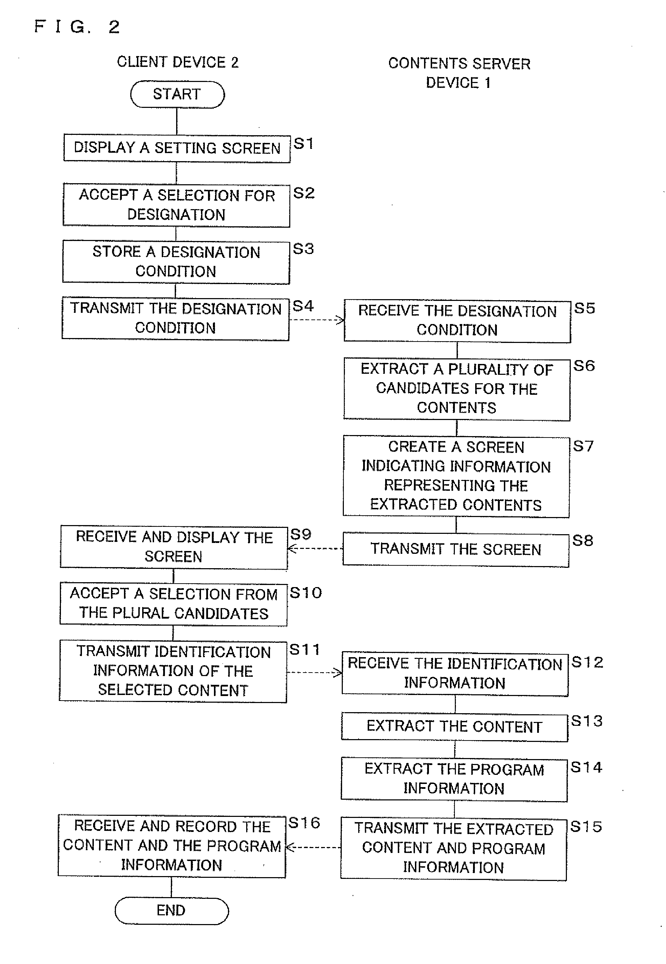

The operation performed in the contents playback system configured as above will now be described using flowcharts. FIG. 2 is a flowchart illustrating an example of an alarm setting procedure executed at the contents playback system according to an embodiment of the invention.

When the user operates to activate the alarm function, the control unit 20 in the client device 2 makes the display unit 26 display a setting screen related to alarm setting based on the function of the control program 2P (step S1). The control unit 20 accepts a selection for designation among a date designation, a condition designation, a date and time designation or a time designation on the setting screen of the display unit 26 (step S2).

Here, the user selects any one of the date designation, condition designation, date and time designation, and time designation by the operation unit 25 based on the setting screen displayed on the display unit 26. Note that, when the condition designation is selected, the user designates the time and repetition, i.e. if it is repeated every day, every week or the like, for making determination with respect to a condition. Moreover, the user designates a date or a day of the week for determining if the time has come when the time designation is selected, and designates a time when a date designation is selected.

The control unit 20 stores a designation condition selected by the notification from the operation unit 25 (step S3), and transmits the designation condition to the contents server device 1 (step S4).

The contents server device 1 receives the designation condition (step S5), while the control unit 10 extracts more than one candidates for the contents based on the received designation condition (step S6). The contents server device 1 creates a screen indicating text information representing the identification information and summary of each of the extracted contents candidates, using screen information read out from screen information DB 113 (step S7), and transmits it to the client device 2 via the communication unit 13 (step S8).

The control unit 20 of the client device 2 receives a screen including the plural candidates and the summary of each candidate to make the display unit 26 display the screen (step S9) and accepts a selection by the operation unit 25 from the plural candidates (step S10). The control unit 20 transmits identification information of the selected content to the contents server device 1 (step S11).

The control unit 10 of the contents server device 1 receives identification information of the content (step S12), extracts the content based on the received identification information from the contents DB 111 (step S13), and extracts program information corresponding to the extracted content from the program information DB 112 based on the received identification information (step S14). The control unit 10 transmits the extracted content and program information to the client device 2 (Step S15).

The control unit 20 of the client device 2 receives the content and program information sent from the contents server device 1, records them in the recording unit 21 (step S16) and terminates the processing.

In the case where the designation condition corresponds to the date and time designation and date designation, the control unit 20 may obtain and update content and program information every time a certain period of time (24 hours, 12 hours or the like) elapses.

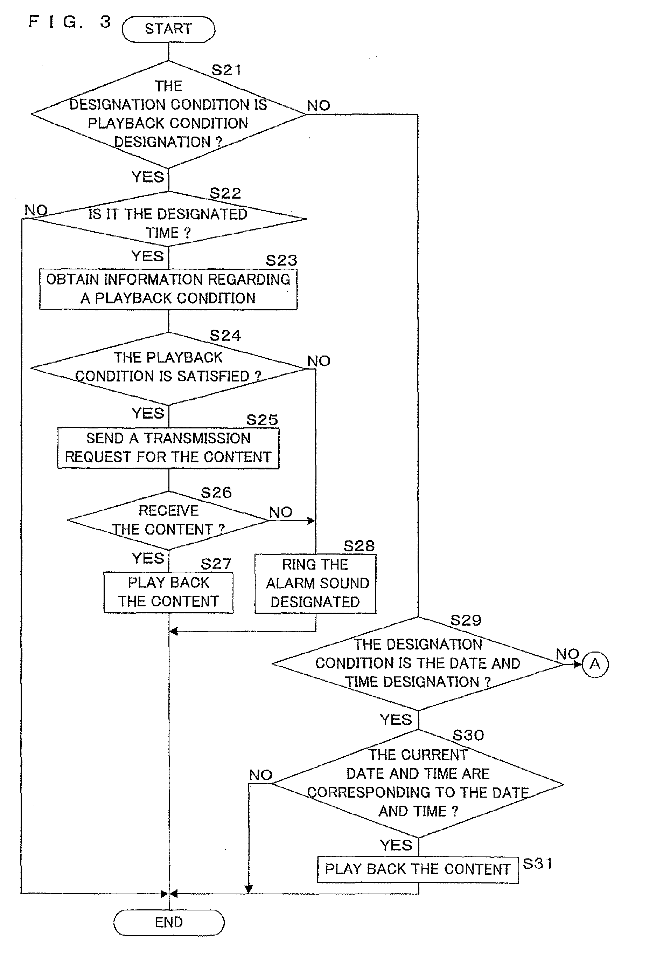

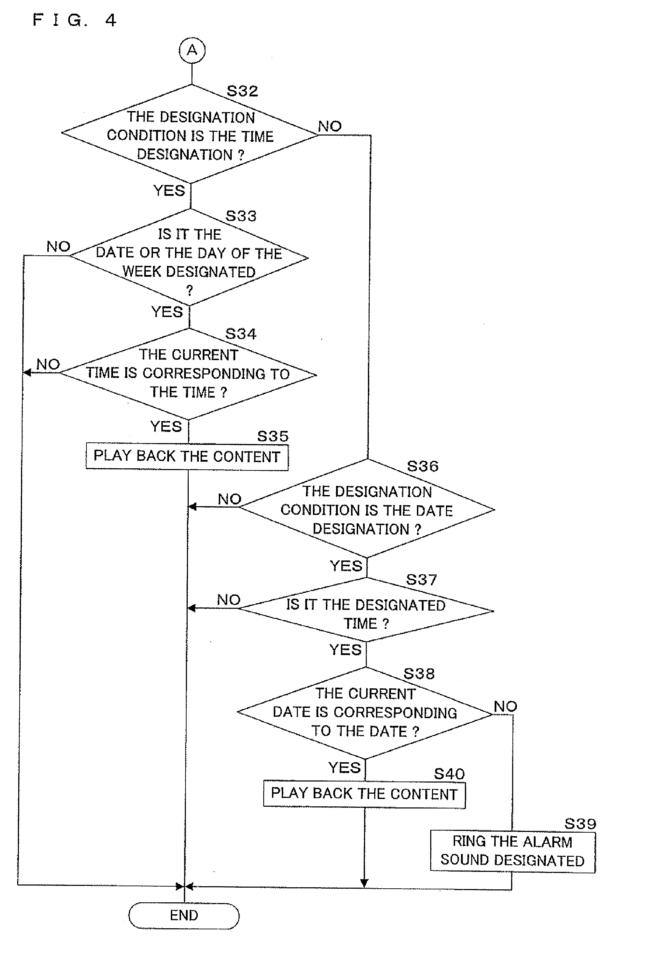

FIGs. 3 and 4 are flowcharts each illustrating an example of an alarm ringing procedure executed by the control unit 20 of the client device 2 according to the present embodiment. The control unit 20 repeats and executes the processing below.

The control unit 20 determines whether or not the designation for the set alarm stored at step S3 in the flowchart of FIG. 2 is a condition designation (step S21). If it is determined that the designation is the condition designation, the control unit 20 determines whether or not the current time is the time designated in advance based on the clock unit 23 (step S22). If it is determined that the current time is not the time designated in advance (S22: NO), the processing is terminated. Since the control unit 20 repeatedly executes the processing shown in FIGs. 3 to 5, the processing for another alarm setting is executed until the designated time arrives.

If it is determined that the designated time has come (S22: YES), the control unit 20 obtains information regarding a playback condition from another server by downloading or the like (step S23). The control unit 20 determines whether or not the program information (playback condition) stored at step S16 of the flowchart in FIG. 2 is satisfied, based on the obtained information (step S24). If the control unit 20 determines that the condition is satisfied (S24: YES), it sends a transmission request for the corresponding the content to the contents server device 1 (step S25).

After sending the transmission request (S25), the control unit 20 of the client device 2 determines whether or not the content corresponding to the transmission request is received (step S26). If it is determined that the content corresponding to the transmission request is received (S26: YES), the control unit 20 plays back the received content, i.e., outputs sound by the sound output unit 27 (step S27), and terminates the processing. At step S27, if the contents include an image, the image is displayed on the display unit 26.

If it is determined that the condition is not satisfied (S24: NO), the control unit 20 makes the sound output unit 27 play the alarm sound designated to be played when the condition is not satisfied (step S28), and terminates the processing. Here, it is also possible to terminate the processing without any action if the condition is not satisfied.

If it is determined that a predetermined period of time has elapsed without receiving content (S26: NO), the control unit 20 plays an alarm sound designated in advance (S28), and terminates the processing.

If it is determined that the designation is not the condition designation at step S21 (S21: NO), the control unit 20 determines whether or not it is the date and time designation (step S29). If it is determined that the designation is the date and time designation (S29: YES), the control unit 20 determines whether or not the current date and time are corresponding to the date and time indicated by the program information, based on the clock unit 23 and the program information associated with the content regarding the date and time designation stored at step S16 of the flowchart in FIG. 2 (step S30). When the control unit 20 performs the determination, for example, ten minutes before the time indicated by the program information is regarded as the corresponding date and time.

If the control unit 20 determines that the date and time corresponding to the program information has not arrived (S30: NO), the processing is terminated. Since the control unit 20 repeatedly executes the processing illustrated in FIG. 3, it executes the processing for another alarm setting until the date and time corresponding to the program information arrives.

If it is determined that the date and time corresponding to the program information has arrived (S30: YES), the control unit 20 plays back the content recorded regarding the date and time designation (step S31), and terminates the processing. Here, the control unit 20 may also send the transmission request for the content to the contents server device 1 once again as in step S25 and receive the updated content for playback.

If it is determined that the designation is not the date and time designation at step S29 (S29: NO), the control unit 20 determines whether or not it is the time designation (step S32). If it is determined the designation is the time designation (S32: YES), the control unit 20 determines if it is the date or the day of the week designated in advance for the time designation, based on the clock unit 23 (step S33). If the control unit 20 determines that it is not the designated date or day or the week (S33: NO), the processing is terminated. Since the control unit 20 repeats the processing, it executes the processing for another alarm setting until the designated date or day of the week arrives.

If the control unit 20 determines that it is the designated date or day of the week (S33: YES), it determines whether or not the current time is corresponding to the time indicated by the program information based on the clock unit 23 and the program information associated with the content regarding the time designation stored at step S16 of the flowchart in FIG. 2 (step S34). Here also, the corresponding time is set as a predetermined time (e.g., ten minutes) before the time indicated by the program information. If the control unit 20 determines that it is not the time corresponding to the program information (S34: NO), the processing is terminated. Since the control unit 20 repeatedly executes the processing illustrated in FIG. 3, it executes the processing for another alarm setting until the corresponding time arrives.

If the control unit 20 determines that the current time is corresponding to the time indicated by the program information (S34: YES), it plays back the content recorded for the time designation (step S35), and terminates the processing. Here, the control unit 20 may also send the transmission request for the content to the contents server device 1 once again as in step S25, and receive the updated content for playback.

If it is determined that the designation is not the time designation at step S32 (S32: NO), the control unit 20 determines whether or not it is the date designation (step S36). If the control unit 20 determines that the designation is not the date designation (S36: NO), the processing is terminated.

If it is determined that the designation is the date designation (S36: YES), the control unit 20 determines whether or not it is the time designated in advance for the date designation, based on the clock unit 23 (step S37). If the control unit 20 determines that it is not the time designated in advance (S37: NO), the processing is terminated. Since the control unit 20 repeatedly executes the processing, it executes the processing for another alarm setting until the designated time arrives.

If the control unit 20 determines that it is the designated time (S37: YES), it determines, with reference to the clock unit 23, whether or not the current date is corresponding to the time indicated by the program information, based on the program information associated with the content regarding the date designation stored at step S16 in the flowchart shown in FIG. 2 (step S38). If it is determined that the current date is not the corresponding date (S38: NO), the control unit 20 makes the sound output unit 27 play the alarm sound designated in advance (step S39) and terminates the processing.

If the control unit 20 determines that the current date is the corresponding date (S38: YES), it plays back the content recorded regarding the date designation (step S40), and terminates the processing. Here, the control unit 20 may also send the transmission request for the content to the contents server device 1 once again as in step S25, and receive the updated content for playback.

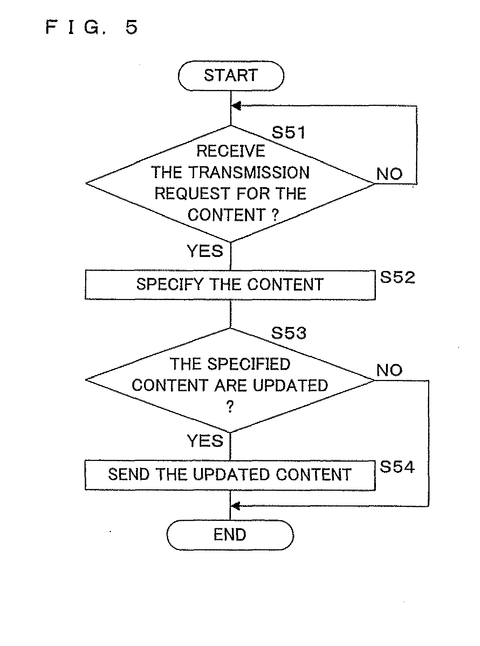

FIG. 5 is a flowchart illustrating an example of a processing procedure executed by the control unit 10 of the contents server device 1 according to the present embodiment. The control unit 10 repeatedly executes the processing described below while the client device 2 is executing the ringing process as illustrated in the flowcharts of FIG. 3 and FIG. 4.

The control unit 10 determines whether or not the transmission request is received (step S51), and terminates the processing if it determines that no transmission request is received (S51: NO). Since the processing is repeatedly executed, the control unit 10 waits until the transmission request is received.

If it is determined that the transmission request is received (S51: YES), the control unit 10 specifies the content regarding the transmission request (step S52) and determines whether or not the specified content is updated at the contents DB 111 (step S53). More specifically, the control unit 10 stores information for specifying the client device 2 from which the transmission request is sent, and determines whether or not the content has been updated during the period from the time point at which the previous alarm setting was performed or the transmission request was made to the current time.

If the control unit 10 determines that the content have been updated (S53: YES), it reads out the updated content and sends the content to the client device 2 (step S54). Here, the control unit 10 may read out the corresponding program information from the program information DB to send it again together with the updated content. If the control unit 10 determines that the content is not updated (S53: NO), the processing is terminated here.

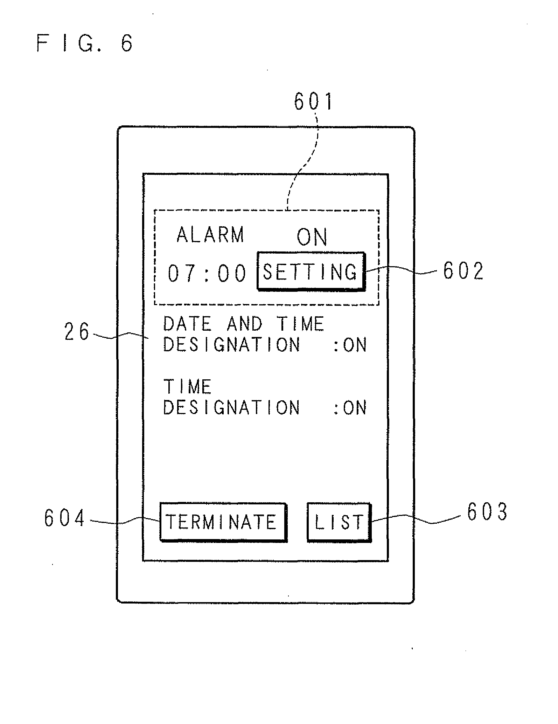

The processing as illustrated in the flowcharts in FIGs. 2 to 5 will be described below in detail with examples of screens shown on the display unit 26. FIGs. 6 to 12 are explanatory views each illustrating an example of a screen displayed on the display unit 26 in the present embodiment. FIG. 6 shows an example of a setting screen displayed when the alarm function is activated. A list of set alarms is displayed on the setting screen. In a region denoted by 601 in FIG. 6, an alarm named "wake-up" is displayed. The reference number 602 denotes a button for changing the "wake-up." If the button 602 is pressed through the operation unit 25 or by touching, the setting screen is displayed.

The reference number 603 in FIG. 6 represents a button for displaying all the contents that can be selected by alarm setting. If the button 603 is pressed, the control unit 10 sends a transmission request for the list of contents without the designation condition at step S2, and displays the received list of contents on the display unit 26. The reference number 604 denotes a button for terminating the alarm function.

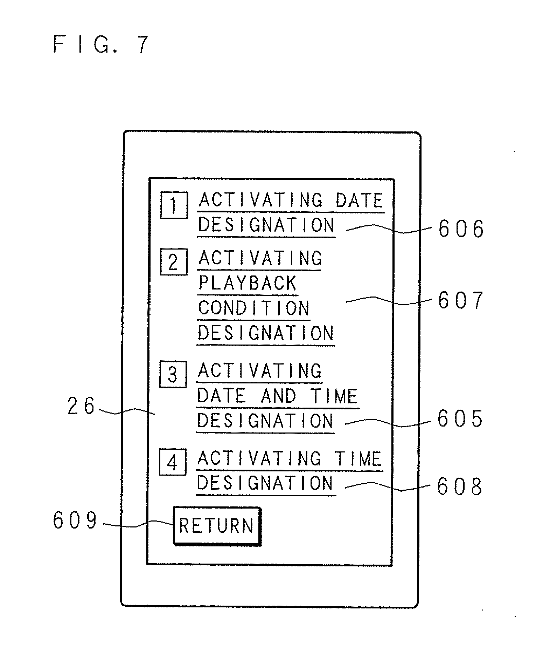

FIG. 7 shows an example of a setting screen displayed when the button 602 in FIG. 6 is pressed. FIG. 7 shows a link (button) 606 for activating date designation, a link (button) 607 for activating condition designation, a link (button) 605 for activating date and time designation, and a link (button) for activating time designation and a button 609 for returning to the screen shown in FIG. 6. On the setting screen as shown in FIG. 7, a selection from the date designation, condition designation, date and time designation and time designation can be accepted. The selection for the designation made here is transmitted from the control unit 10 to the contents server device 1, where candidates for the content are extracted in accordance with the selected designation.

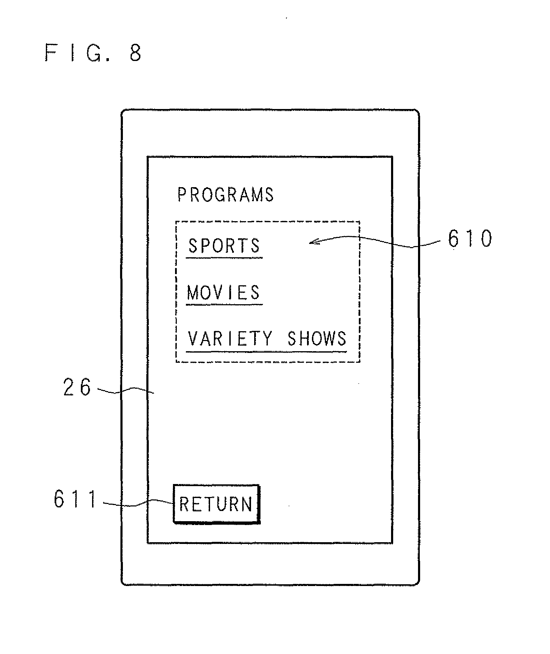

FIG. 8 shows an example of a screen for refining information, displayed when the link 605 for activating date and time designation is selected on the screen shown in FIG. 7 (in the case where a numeric key "3" is pressed or where the "decision" button is pressed when the scroll bar is at the link 605). When the date and time designation is selected, program information on programs for uniquely specifying time and date are extracted as contents. Since there are a large number of extracted contents, it is preferable to show a screen on which a refining condition can be selected such that the candidates can be refined, as shown in FIG. 8. Moreover, the contents may be extracted in the order of most recent broadcast dates, for example. In the example of the screen illustrated in FIG. 8, a list 610 of information for refining and a button 611 for returning to the screen shown in FIG. 7 are shown. In the example of FIG. 8, categories for broadcast programs of "sports," "movies" and "variety shows" are displayed.

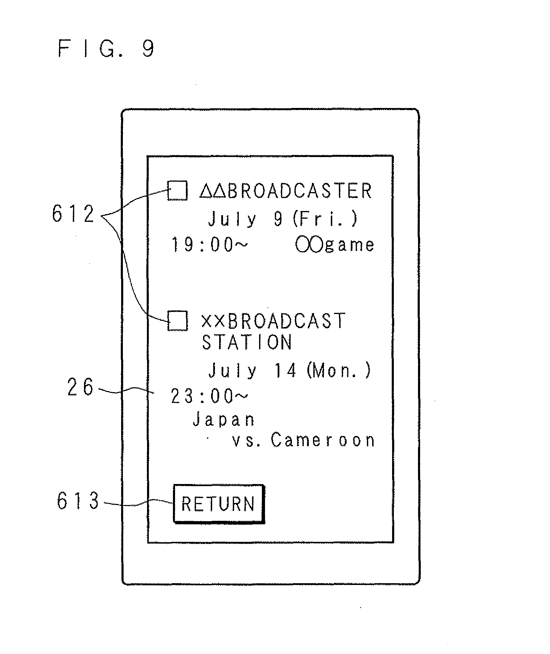

FIG. 9 is an example of a screen showing text information including the identification information and summary of the candidates for the contents when "sports" is selected from the list 610 in FIG. 8. As illustrated in FIG. 9, buttons 612 for selecting content and a button 613 for returning to the screen in FIG. 8 are shown on the screen displaying the candidates. In the example of FIG. 9, two kinds of program information are displayed as candidates for the content. The text information indicating the details of the program information includes a broadcast station (channel), a date, a start time and a program name for a program.

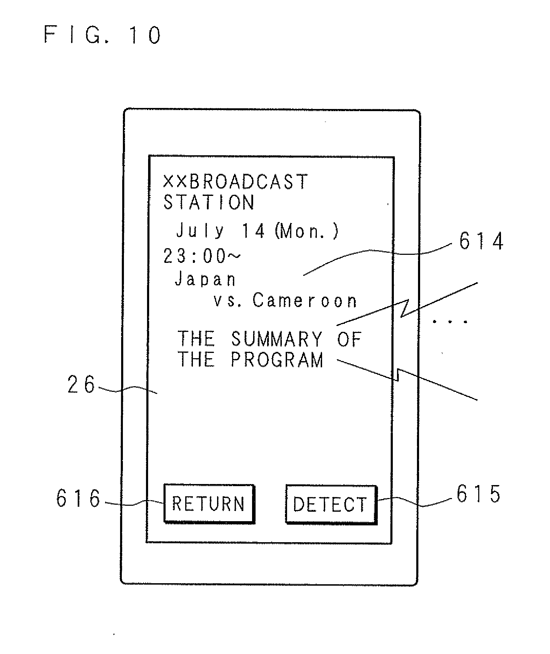

Assume that the user is planning to watch a program (Japan vs. Cameroons) which is to be broadcast on Monday, June 14, and selects the information regarding the broadcasting schedule for the program as the content. Here, the information on the broadcasting schedule is selected and the button 612 is pressed. FIG. 10 shows an example of a screen displayed when the button 612 is pressed. The region denoted by 614 in FIG. 10 displays text information indicating the details of the broadcast program, as well as a decision button 615 which is to be pressed by the user when selected and a button 616 for returning to FIG. 9. Moreover, sound related to the broadcasting schedule for the selected program is output here as a preview.

When selecting the information related to the broadcast schedule for program as shown in FIG. 10 as the content, the user presses the decision button 615. When the decision button 615 is pressed, the control unit 20 detects it and sends the identification information on the program (Japan vs. Cameroon) which is to be broadcast on Monday, June 14 to the contents server device 1 (S11). Thus, sound and image data notifying the user of the broadcasting schedule for the program are sent to the client device 2 as the content. Also, the program information associated with the content, i.e. time information such as the broadcasting date of "6/14/2010 (Mon)" and "23:00 Japan time," text information and screen information representing the summary of the program, are sent from the contents server device 1 to the client device 2 (S15).

At the client device 2, the transmitted content (sound and image date notifying the user of the broadcast schedule of the program) and program information including time information are recorded in the recording unit 21 (S16). The control unit 20 then determines at the alarm ringing process that the designation for the set alarm corresponds to the date and time designation (S29: YES) while determining that the current date and time are corresponding to "6/14/2010 (Mon)" and "23:00 Japan time," for example, 22:50 on June 14, 2010 (S30: YES), the content is played (S31). The sound of the content plays, for example, "Japan vs. Cameroon match will be kicked off at 23:00 Japan Time.... It is broadcast on television." Note that, the theme song for the program may be loop-played as main content, while sound for reading out detailed program information, e.g. information on performers, highlights of the program, may be played as sub content. By using a snooze function in the alarm function, the main content is initially played while the sub content is played at and after the second time.

Accordingly, the user can set the alarm automatically including date and time only by selecting a content, without the need for setting a date, a time and an alarm sound him/herself. Moreover, the sound played as the alarm sound corresponds to information related to the date and time. In particular, since the contents are corresponding to the information on a broadcast program and are automatically set to be played as an alarm at the date and time when the program is broadcast as described above, the user who selects the content has a lower possibility of missing the program he/she wishes to watch.

As described with reference to the flowchart, the setting can also be performed for a date only, a time only or a condition only, in addition to the setting for both the date and time. When, for example, the user tries to play back the content at a condition designating time only, the contents server device 1 extracts information on a program repeatedly broadcast at the same time on a regular basis, i.e., every day, weekdays only, weekends only or the like, and transmits the information to the client device 2. At the client device 2, a broadcasting time for the selected program is set. Days of the week may be set automatically or may be designated by the user. Thus, content is automatically played at a time corresponding to the content on a certain day of the week. More specifically, sound and image notifying the user of broadcasting is played a predetermined time before the broadcasting time of a program on a day of the week on which the program is to be broadcast. Thus, the user has a lower possibility of missing the program.

In the embodiment described above, the contents are corresponding to the sound including program information for notifying the user of the details of the broadcast program. The contents may, however, not be limited thereto, but may also be various contents including sound that reads out product information such as advertising and release schedule of the product, store information, weather information and traffic information.

If, for example, the contents are for indicating congestion information for a road or a store, a playback condition is recorded in a program information DB so as to notify the user only when congestion is occurring. If the contents are corresponding to the weather information, the contents are played under a playback condition such as a temperature or an amount of rainfall. The client device 2 obtains information on the playback condition at a time designated by the user, determines whether or not the playback condition is satisfied, sends a transmission request for the corresponding content if the playback condition is satisfied, and plays back the received content.

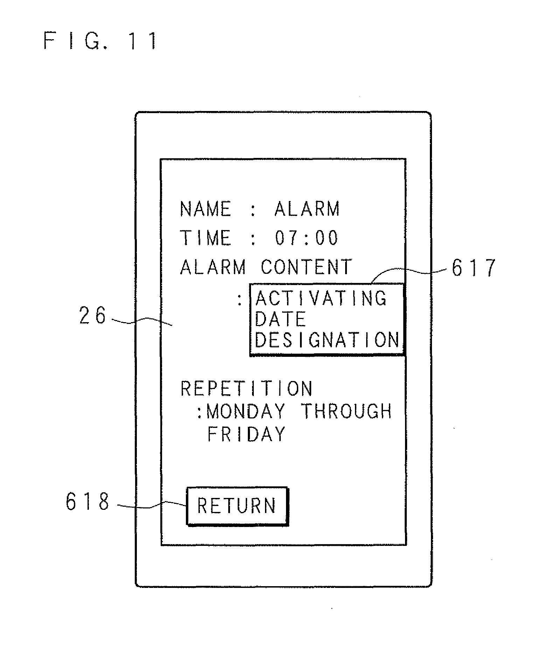

The contents may be sound related to product information. When a date is designated, the contents associated with time information specified by the date is extracted at the contents server device 1, the contents here corresponding to the sound reading out information including, for example, a release date of a product. FIG. 11 is an example of a setting screen showing the case where a link 606 for activating date designation shown in FIG. 7 is selected (when the numeric key "1" is pressed, for example). In the example of a screen shown in FIG. 11, "07:00" is selected as the time for playback content (alarm sound) and a designation for repetition of the content Monday through Friday, a button 617 for activating date designation and a button 618 for returning to FIG. 7 are displayed. When the user presses the button 617 for activating date designation to select a date designation, the information for uniquely identifying a date only is extracted as the content.

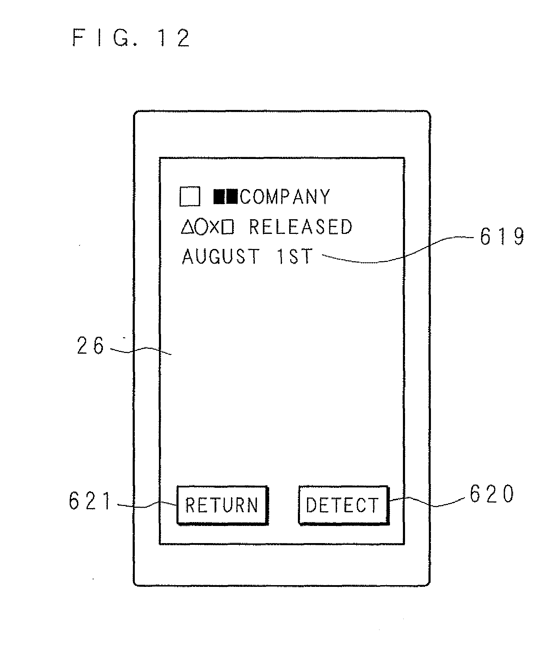

FIG. 12 is an example of a screen showing identification information for contents selected from the candidates and text information including the summary of the content. In FIG. 12, the information on the selected contents are displayed in the region 619, while a decision button 620 which is to be pressed for selecting as well as a button 621 for returning to the previous screen are displayed. In the example of FIG. 12, as an example of the selected contents, information on a product which is to be released from a company on August 1st is displayed. Here, the program information (time information) associated with the content here includes a release date.

Assume that the user selects content related to a product which is to be released on August 1st. In such a case, the decision button 620 is pressed. When the decision button 620 is pressed, the control unit 20 detects this and transmits the identification information of the content for the product information to the contents server device 1 (S11). As a result, the sound (content) notifying the user of the release date of the product is played at "07:00" on August 1st, which is the time designated by the user. Note that sub content including sound informing details of the product may also be played as a snoozing function.

As this invention may be embodied in several forms without departing from the spirit of essential characteristics thereof, the present embodiment is therefore illustrative and not restrictive. The scope of the invention is defined by the appended claims rather than by the description preceding them, and all changes that fall within metes and bounds of the claims, or equivalence of such metes and bounds thereof are therefore intended to be embraced by the claims.

## Claims

1. A contents playback system, comprising a contents transmission device for reading out and transmitting contents containing recorded sound, and a mobile terminal device connected to the contents transmission device through a communication network and having an alarm function for playing back the contents at a predetermined time, **characterized in that**
at least one piece of time information among a date, a day of the week and a time corresponding to details of the contents is associated with and recorded in the contents,
the contents transmission device includes:
a means for receiving identification information for identifying contents from the mobile terminal device;
a means for extracting contents and time information associated with the contents based on the identification information; and
a means for transmitting the extracted contents and time information to the mobile terminal device, and
the mobile terminal device includes:
a means for accepting a selection of contents;
a means for transmitting identification information of selected contents to the contents transmission device; and
a means for playing back the contents at a time indicated by the time information based on the contents and time information received from the contents transmission device.

2. The contents playback system according to Claim 1, **characterized in that**
the contents include a sound indicating a date and details of a broadcast program, and
the time information associated with the contents corresponds to at least one of a date, a day of the week and a time corresponding to the broadcasting date.

3. A contents playback system comprising a contents transmission device for reading out and transmitting contents containing recorded sound, and a mobile terminal device connected to the contents transmission device through a communication network and having an alarm function for playing back the contents at a predetermined time, **characterized in that**
a playback condition corresponding to details of the contents is associated with and recorded in the contents,
the contents transmission device includes:
a means for receiving identification information for identifying contents from the mobile terminal device;
a means for extracting contents and a playback condition associated with the contents based on the identification information; and
a means for transmitting the extracted contents and playback condition to the mobile terminal device, and
the mobile terminal device includes:
a means for accepting a selection of contents;
a means for transmitting identification information of selected contents to the contents transmission device; and
a means for playing back the contents when the playback condition is satisfied based on the contents and playback condition received from the contents transmission device.

4. The contents playback system according to any one of Claims 1 to 3, **characterized in that**
said mobile terminal device includes:
a means for accepting a designation of at least one of a date, a day of the week and a time;
a means for sending a transmission request for contents to the contents transmission device when the accepted date, day of the week and time are the corresponding date, day of the week and time,
the contents transmission device includes:
a means for receiving a transmission request sent from the mobile terminal device;
a means for specifying contents based on the received transmission request;
a means for determining whether or not the specified contents are updated; and
a means for sending updated contents to the mobile terminal device when the contents are updated, and
the mobile terminal device is configured to play back the contents sent from the contents transmission device in accordance with the transmission request.

5. A method of playback contents including a recorded sound at a predetermined time with a mobile terminal device connected through a communication network to a contents transmission device for reading and transmitting the contents, **characterized in that**
at least one of time information among a date, a day of the week and a time corresponding to details of the contents is associated with and recorded in the contents,
the mobile terminal device performs the steps of:
accepting a selection of contents; and
transmitting identification information of selected contents to the contents transmission device,
the contents transmission device performs the steps of:
receiving identification information from the mobile terminal device;
extracting contents and time information associated with the contents based on the received identification information; and
transmitting the extracted contents and time information to the mobile terminal device, and
the mobile terminal device plays back the contents at a time indicated by the time information based on the contents and time information received from the contents transmission device.
